# EUROPÄISCHE PATENTANMELDUNG

(11) **EP 2 189 607 A2**
(43) Veröffentlichungstag der Anmeldung: **26.05.2010**
(21) Anmeldenummer: 09013915.5
(22) Anmeldetag: 05.11.2009
(51) Int. Cl.: E05F 15/20, E05F 15/00

(54) **Steuerungssystem für einen Torantrieb**

(30) Priorität: 21.11.2008 DE 102008058401
(71) Anmelder: Marantec Antriebs- und Steuerungstechnik GmbH & Co. KG., 33428 Marienfeld (DE)
(72) Erfinder: Hörmann, Michael, 33790 Halle /Westfalen (DE)
(74) Vertreter: Laufhütte, Dieter

(57) **Zusammenfassung**

Die vorliegende Erfindung betrifft ein Steuerungssystem für einen Torantrieb mit mehreren Komponenten und einem digitalen Datenbus, über welchen die Komponenten kommunizieren, wobei mindestens eine Sicherheits-Komponente wie z. B. eine Schließkantensicherung oder eine Lichtschranke sicherheitsrelevante Ereignisse erkennt und über den Datenbus meldet. Dabei blockiert die Sicherheits-Komponente, wenn sie ein sicherheitsrelevantes Ereignis erkennt, die Kommunikation auf dem Datenbus für eine bestimmte Zeit, wobei die übrigen Komponenten die fehlende Kommunikation auf dem Bussystem erkennen und als Meldung eines sicherheitsrelevanten Ereignisses werten.

## Beschreibung

Die vorliegende Erfindung betrifft ein Steuerungssystem für einen Torantrieb mit mehreren Komponenten und einem digitalen Datenbus, über welchen die Komponenten kommunizieren, wobei mindestens eine Sicherheitskomponente wie z. B. eine Schließkantensicherung oder eine Lichtschranke sicherheitsrelevante Ereignisse erkennt und über den Datenbus meldet. Als digitaler Datenbus kann dabei z. B. eines der auf dem Markt erhältlichen Bus-Systeme RS485, Profi-Bus, Ethernet, usw. eingesetzt werden.

Ein solches System ist beispielsweise aus der DE 20 2005 021 457 U1 bekannt. Die zu übertragenden Daten, über welche die Sicherheitskomponente ein sicherheitsrelevantes Ereignis meldet, werden dabei in ein Telegramm verpackt und über den Datenbus versendet. Da die Kommunikation auf dem Datenbus von einer Master-Komponente gesteuert wird, erfolgt die Übertragung jedoch erst dann, wenn die Master-Komponente die Sicherheitskomponente das nächste mal anspricht. Wie schnell ein Telegramm übertragen wird, ist daher sowohl von der Übertragungsrate als auch von der Anzahl der Bus-Teilnehmer abhängig.

Sicherheitsrelevante Geräte wie z. B. die Schließkantensicherung oder Ruhestromkreise sollten ein sicherheitsrelevantes Ereignis jedoch möglichst schnell und ohne Verzögerung mitteilen können.

Aufgabe der vorliegenden Erfindung ist es daher, ein Steuerungssystem für einen Torantrieb zur Verfügung zu stellen, welches eine möglichst kurze oder zumindest kalkulierbare Übertragungszeit bei sicherheitsrelevanten Geräten aufweist.

Diese Aufgabe wird von einem Steuerungssystem gemäß den unabhängigen Ansprüchen und den entsprechenden Verfahren zur Steuerung von Torantrieben zur Verfügung gestellt. Vorteilhafte Ausgestaltungen der Erfindung sind dabei Gegenstand der Unteransprüche.

Die vorliegende Erfindung umfasst ein Steuerungssystem für einen Torantrieb mit mehreren Komponenten und einem digitalen Datenbus, über welchen die Komponenten kommunizieren. Dabei ist eine Sicherheitskomponente wie z. B. eine Schließkantensicherung oder eine Lichtschranke vorgesehen, welche sicherheitsrelevante Ereignisse erkennt und über den Datenbus meldet. Erfindungsgemäß blockiert die Sicherheitskomponente dabei die Kommunikation auf dem Datenbus für eine bestimmte Zeit, wenn sie ein sicherheitsrelevantes Ereignis erkennt. Die übrigen Komponenten können die fehlende Kommunikation auf dem Bus-System erkennen und werten dies als Meldung eines sicherheitsrelevanten Ereignisses. Die übrigen Komponenten können so entsprechend auf das sicherheitsrelevante Ereignis reagieren. Sicherheitsrelevante Ereignisse, welche von der Sicherheitskomponente erkannt und gemeldet werden, sind dabei insbesondere außerhalb des Steuerungssystems liegende Ereignisse, welches für die Sicherheit des Torbetriebs relevant sind, wie z.B. das Auftreffen der Torkante auf ein Hindernis.

Die Sicherheitskomponente löst also einen Safety Interrupt aus, wenn sie ein sicherheitsrelevantes Ereignis erkennt, indem sie die Kommunikation auf dem Datenbus für eine bestimmte Zeit blockiert. Der große Vorteil einer solchen Meldung von sicherheitsrelevanten Ereignissen ist es, dass ein solcher Safety Interrupt zu jeder Zeit ausgelöst werden kann. Dabei ist die Reaktionszeit unabhängig von der Übertragungsrate und unabhängig von der Anzahl der Bus-Teilnehmer.

Vorteilhafterweise ist dabei vorgesehen, dass der Motor des Torantriebs bei der Meldung eines sicherheitsrelevanten Ereignisses gestoppt und/oder zurückgefahren wird. Blockiert also die Sicherheitskomponente die Kommunikation auf dem Datenbus, erkennt die Steuerung des Torantriebs dies als sicherheitsrelevantes Ereignis und stoppt den Motor sofort oder fährt diesen zurück.

Von besonderem Vorteil ist die vorliegende Erfindung in einem Steuerungssystem, in welchem die Kommunikation über den Datenbus von einer Master-Komponente gesteuert wird, welche die Slave-Komponenten jeweils einzeln anspricht. Dabei kann es sich bei der Sicherheitskomponente um eine Slave-Komponente handeln. Bei dem erfindungsgemäßen digitalen Bus-System handelt es sich damit z. B. um ein Bus-System mit festen Kommunikationsfenstern. Hier spricht die Master-Komponente immer nur eine Slave-Komponente an und diese schickt daraufhin eine Antwort zurück. Im nächsten Kommunikationsfenster spricht die Master-Komponente die nächste Slave-Komponente an. Dabei kann die Master-Komponente die Reihenfolge der angesprochenen Slave-Komponenten beliebig gestalten.

Wird in einem solchen System ein sicherheitsrelevantes Ereignis wie im Stand der Technik über ein Datentelegramm versendet, ist nicht zu jeder Zeit sichergestellt, dass das sicherheitsrelevante Ereignis schnellstmöglich gemeldet wird. Vielmehr würde dieses Ereignis erst dann gemeldet, wenn die Master-Komponente die sicherheitsrelevante Slave-Komponente das nächste Mal anspricht. Ein Safety Interrupt aller Komponenten bei einer gestörten bzw. ausbleibenden Kommunikation auf den Datenbus ist zwar auch schon im Stand der Technik vorgesehen, um bei einer internen Störung z. B. der Master-Komponente Gefährdungen durch einen weiterlaufenden Torantrieb zu vermeiden. Die vorliegende Erfindung sieht nun aber vor, dass die Sicherheitskomponente einen solchen Safety Interrupt aktiv auslöst, wenn sie ein sicherheitsrelevantes, insbesondere externes Ereignis erkennt. Die aktive Auslösung des Safety Interrupts ermöglicht dabei eine sofortige Reaktion, da sie nicht auf den von den Master-Komponente gesteuerten Datenaustausch angewiesen ist.

Die erfindungsgemäße Auslösung eines Safety Interrupts durch die Sicherheitskomponente gibt dieser damit die Möglichkeit, ein sicherheitsrelevantes Ereignis zu jedem Zeitpunkt zu melden. Die Sicherheitskomponente blockiert hierfür die Kommunikation auf dem digitalen Datenbus für eine festgelegte Zeit. Alle anderen Bus-Teilnehmer erkennen die fehlende Kommunikation und bewerten dies als ein sicherheitsrelevantes Ereignis. Der Torantrieb reagiert auf diese Information mit einem schnellen Stoppen des Motors. Um was für eine Art von sicherheitsrelevanten Ereignis es sich handelt, ist dabei zunächst für die schnelle Reaktion der Torantriebssteuerung zweitrangig, so dass auf die Mitteilung von näheren Informationen durch ein Datentelegramm, wie dies im Stand der Technik zur Meldung eines sicherheitsrelevanten Ereignisses vorgesehen ist, zugunsten einer schnelleren Meldung im ersten Schritt verzichtet wird.

Vorteilhafterweise ist jedoch vorgesehen, dass die Master-Komponente in einem zweiten Schritt, wenn die Kommunikation auf dem Datenbus wieder freigegeben ist, bei den Slave-Komponenten nachfragt, welches sicherheitsrelevante Ereignis erkannt wurde. Die Master-Komponente kann dann gegebenenfalls entsprechende Steuerbefehle absenden. Wird also der Datenbus durch die Sicherheitskomponente wieder freigegeben, kann der Master bei den Slave-Komponenten erfragen, um welches Ereignis es sich handelt. Die näheren Informationen zum sicherheitsrelevanten Ereignis können so in einem zweiten Schritt, nachdem das Auftreten eines sicherheitsrelevanten Ereignisses durch den erfindungsgemäßen Safety Interrupt gemeldet wurde, durch die standardmäßige Übertragung eines entsprechenden Daten-Telegramms gemeldet werden.

Alternativ kann jedoch auch vorgesehen sein, dass die Kommunikation über den Datenbus von einer Master-Komponente gesteuert wird, welche die Slave-Komponenten jeweils einzeln anspricht, wobei es sich bei der Sicherheits-Komponente um die Master-Komponente handelt. Die Sicherheitskomponente steuert damit die Kommunikation auf dem Datenbus. Zur Meldung eines sicherheitsrelevanten Ereignisses blockiert sie nun die Kommunikation, indem sie nicht mehr sendet. Hierdurch erkennen alle angeschlossenen Slave-Komponenten gleichzeitig, dass ein sicherheitsrelevantes Ereignis vorliegt, ohne dass die Sicherheits-Komponente alle Slave-Komponenten einzeln ansprechen müsste. Nach der Wiederaufnahme der Kommunikation kann die Sicherheitskomponente dann in einem zweiten Schritt einzelne Slave-Komponenten ansprechen und so spezifisch auf das sicherheitsrelevante Ereignis reagieren.

Die vorliegende Erfindung umfasst ein alternatives Steuerungssystem für einen Torantrieb mit mehreren Komponenten und einem digitalen Datenbus, über welchen die Komponenten kommunizieren. Dabei ist wiederum mindestens eine Sicherheitskomponente wie z. B. eine Schließkantensicherung oder eine Lichtschranke vorgesehen, welche sicherheitsrelevante Ereignisse erkennt und über den Datenbus meldet. Erfindungsgemäß wird dabei die Kommunikation über das Bus-System mittels einer Arbitrierung gesteuert. Die Sicherheitskomponente überträgt die Meldung eines sicherheitsrelevanten Ereignisses dabei erfindungsgemäß unter Verwendung einer systemspezifischen Adresse, insbesondere der Adresse mit der höchsten Priorität. Dies ist üblicherweise die niedrigste Adresse.

In Bus-Systemen mit Arbitrierung wird die Kommunikation nicht von einer Master-Komponente organisiert, sondern es können alle Bus-Teilnehmer zu jedem Zeitpunkt versuchen, ein Datentelegramm zu übertragen. Wollen mehrere Teilnehmer gleichzeitig ein Telegramm übertragen, dann setzt sich das Telegramm mit der niedrigeren Adresse durch, was als Arbitrierung bezeichnet wird. Ein Bus-Teilnehmer, der die Arbitrierung verloren hat, wechselt von "Senden" auf "Empfang". Er startet die Übertragung seines Telegramms erneut, wenn der Bus wieder frei ist.

Erfindungsgemäß werden sicherheitsrelevante Ereignisse nun immer mit einer systemspezifischen Adresse, insbesondere der Adresse mit der höchsten Priorität übertragen. Hierdurch ist gewährleistet, dass diese Informationen zu jeder Zeit im nächsten Telegramm übertragen werden. Telegramme mit sicherheitsrelevanten Ereignissen haben damit immer höchste Priorität bei der Übertragung über das digitale Bus-System.

Die vorliegende Erfindung umfasst weiterhin Verfahren zur Steuerung eines Torantriebs, wie sie in den erfindungsgemäßen Steuerungssystemen implementiert sind. Die Implementierung der erfindungsgemäßen Verfahren erfolgt dabei durch eine entsprechende Ausführung bzw. Programmierung der Steuerungselektroniken und des Bus-Systems. Die Komponenten des Steuerungssystems umfassen dabei jeweils eine entsprechende Steuerungselektronik, welche üblicherweise auf Grundlage eines oder mehrere Mikrokontroller oder Mikrocomputer aufgebaut ist.

Die Erfindung umfasst dabei insbesondere ein Verfahren zur Steuerung eines Torantriebs, bei welchem mehrere Komponenten über einen digitalen Datenbus kommunizieren, wobei mindestens eine Sicherheitskomponente, wie z. B. eine Schließkantensicherung oder eine Lichtschranke sicherheitsrelevante Ereignisse erkennt und über den Datenbus meldet. Dabei ist vorgesehen, dass die Sicherheitskomponente, wenn sie ein sicherheitsrelevantes Ereignis erkennt, die Kommunikation auf dem Datenbus für eine bestimmte Zeit blockiert, wobei die übrigen Komponenten die fehlende Kommunikation auf dem Bus-System erkennen und als Meldung eines sicherheitsrelevanten Ereignisses werten. Hierdurch ergeben sich die gleichen Vorteile, wie sie bereits oben bezüglich des erfindungsgemäßen Steuerungssystems dargestellt wurden.

Vorteilhafterweise ist weiterhin vorgesehen, dass der Motor des Torantriebs bei einer Meldung eines sicherheitsrelevanten Ereignisses gestoppt und/oder zurückgefahren wird.

Vorteilhafterweise wird dabei erfindungsgemäß die Kommunikation über den Datenbus von einer Master-Komponente gesteuert, welche die Slave-Komponenten jeweils einzeln anspricht. Bei dieser Kommunikationsarchitektur erlaubt das erfindungsgemäße Verfahren dennoch eine sofortige Reaktion auf das Erkennen von sicherheitsrelevanten Ereignissen.

Vorteilhafterweise wird dabei erfindungsgemäß die Kommunikation über den Datenbus von einer Master-Komponente gesteuert, welche die Slave-Komponenten jeweils einzeln anspricht, wobei es sich bei der Sicherheitskomponente um eine Slave-Komponente handelt. Bei dieser Kommunikationsarchitektur erlaubt das erfindungsgemäße Verfahren dennoch eine sofortige Reaktion auf das Erkennen von sicherheitsrelevanten Ereignissen, wobei die Reaktionszeit unabhängig von der Übertragungsrate und der Anzahl der Bus-Teilnehmer ist.

Erst im zweiten Schritt ist es für den Master nach der sofortigen Meldung eines sicherheitsrelevanten Ereignisses durch den Safety Interrupt interessant, um welches konkrete Ereignis es sich handelt. Vorteilhafterweise ist nun vorgesehen, dass die Master-Komponente, wenn die Kommunikation über den Datenbus wieder freigegeben ist, bei den Slave-Komponenten nachfragt, welches sicherheitsrelevante Ereignis erkannt wurde. Die Master-Komponente sendet dann gegebenenfalls entsprechende Steuerbefehle als Reaktion auf die Information, um welches sicherheitsrelevante Ereignis es sich handelt.

Alternativ kann jedoch auch vorgesehen sein, dass die Kommunikation über den Datenbus von einer Master-Komponente gesteuert wird, welche die Slave-Komponenten jeweils einzeln anspricht, wobei es sich bei der Sicherheits-Komponente um die Master-Komponente handelt.

Die vorliegende Erfindung umfasst ein weiteres Verfahren zur Steuerung eines Torantriebs, bei welchem mehrere Komponenten über einen digitalen Datenbus kommunizieren, wobei mindestens eine Sicherheitskomponente, wie z. B. eine Schließkantensicherung oder eine Lichtschranke sicherheitsrelevante Ereignisse erkennt und über den Datenbus meldet. Dabei ist vorgesehen, dass die Kommunikation über das Bus-System mittels einer Arbitrierung gesteuert wird und die Sicherheitskomponente, wenn sie ein sicherheitsrelevantes Ereignis erkennt, die Meldung des Ereignisses unter Verwendung einer systemspezifischen Adresse, insbesondere der Adresse mit der höchsten Priorität überträgt. Durch die Meldung von sicherheitsrelevanten Ereignissen unter höchster Priorität ist ebenfalls sichergestellt, dass diese Informationen zu jeder Zeit im nächsten Telegramm übertragen werden können.

Die vorliegende Erfindung umfasst weiterhin einen Torantrieb mit einem Steuerungssystem, wie er oben beschrieben wurde. Der Torantrieb kann dabei zum Antrieb beliebiger Tore eingesetzt werden, z.B. zum Öffnen und Schließen von Garagentoren oder Industrietoren. Bei den Toren kann es sich dabei z. B. um Klapp-, Roll- oder Flügeltore handeln. Ein erfindungsgemäßer Torantrieb umfasst dabei eine Antriebseinheit mit einem Motor, durch welche sich das Tor öffnen und schließen läßt. Eine Steuerungselektronik der Antriebseinheit steuert dabei die Bewegung der Antriebseinheit und damit des Tores und kommuniziert über einen digitalen Datenbus mit weiteren Komponenten.

Als Komponenten sind dabei z. B. ein Handsender, eine Programmiereinheit, ein Wandschalter oder ähnliche Ein- und Ausgabe-Komponenten denkbar. Weiterhin ist mindestens eine Sicherheitskomponente wie z. B. eine Schließkantensicherung, eine Lichtschranke oder ein Ruhestromkreis vorgesehen, welche sicherheitsrelevante Ereignisse erkennt.

Durch die erfindungsgemäßen Verfahren zum Melden dieser sicherheitsrelevanten Ereignisse durch Auslösen eines Safety-Interrupts können dabei die Probleme, welche eine normale Datenübertragung mit sich bringt, vermieden werden. Insbesondere ermöglicht die vorliegende Erfindung dabei eine kurze und insbesondere kalkulierbare Übertragungszeit bei sicherheitsrelevanten Geräten.

Die vorliegende Erfindung wird nun anhand eines Ausführungsbeispiels sowie Figuren näher erläutert. Dabei zeigen:
- Figur 1:: die normale Kommunikation auf dem Datenbus eines Ausführungsbeispieles eines erfindungsgemäßen Steuerungssystems,
- Figur 2:: die Meldung eines sicherheitsrelevanten Ereignisses durch eine Blockade der Kommunikation auf dem Datenbus, und
- Figur 3:: das Vorgehen nach der Meldung eines sicherheitsrelevanten Ereignisses, wenn die Kommunikation auf dem Datenbus wieder freigegeben ist.

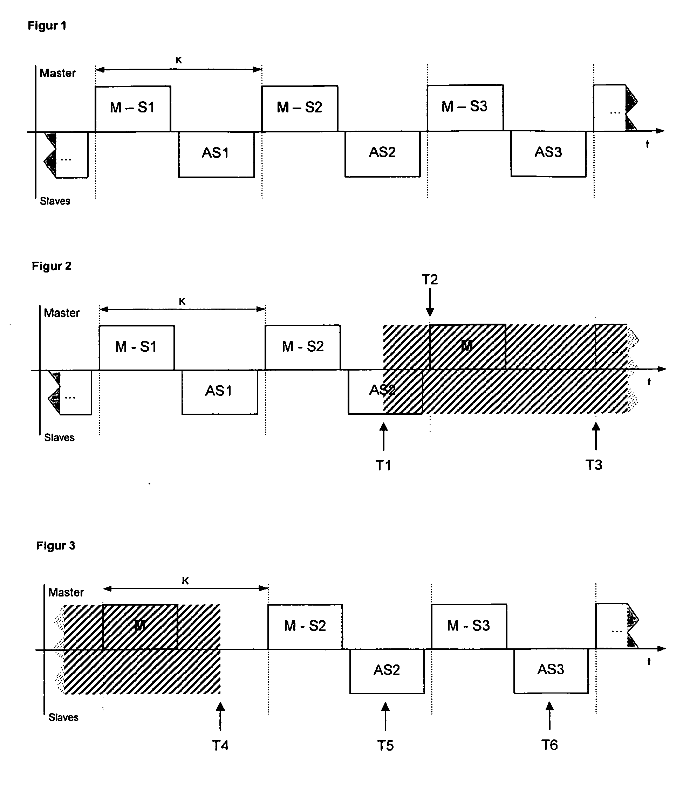

In den Figuren 1 bis 3 ist die Funktionsweise eines Ausführungsbeispiels eines erfindungsgemäßen Steuerungssystems gezeigt, bei welchem ein Ausführungsbeispiel eines erfindungsgemäßen Verfahrens zur Steuerung eines Torantriebs implementiert ist. Dabei handelt es sich bei dem Ausführungsbeispiel um ein Steuerungssystem für einen Torantrieb mit mehreren Komponenten und einem digitalen Daten-Bus, über welchen die Komponenten miteinander kommunizieren, wobei mindestens eine Sicherheitskomponente wie z. B. eine Schließkantensicherung oder eine Lichtschranke vorgesehen ist, welche sicherheitsrelevante Ereignisse erkennt und über den Daten-Bus meldet.

Dabei ist eine Master-Komponente M vorgesehen, welche die Kommunikation über den Daten-Bus steuert. Diese spricht die Slave-Komponenten S1 - S3 jeweils einzeln an, wofür feste Kommunikationsfenster K vorgesehen sind. Mindestens die Slave-Komponente S3 ist dabei eine Sicherheitskomponente, wobei es sich auch bei den anderen Slave-Komponenten und/oder der Master-Komponente um Sicherheitskomponenten handeln kann. Es können auch weitere, im Ausführungsbeispiel nicht gezeigte Slave-Komponenten vorgesehen seien.

In den Figuren 1 bis 3 ist jeweils die Kommunikation über den Daten-Bus dargestellt. Figur 1 zeigt dabei die normale Kommunikation über den digitalen Daten-Bus. Dabei sind feste Kommunikationsfenster K vorgesehen, in welchen die Master-Komponente M nacheinander die einzelnen Slave-Komponenten S1 - S3 abfragt. Im Datentelegramm M-S1 sendet dabei die Master-Komponente M an die Slave-Komponente S1. Daraufhin antwortet die Slave-Komponente S1 in dem darauf folgenden Datentelegramm AS1. Hierdurch ist ein Telekommunikationsfenster K abgeschlossen. Daraufhin sendet die Master-Komponente M im Datentelegramm M-S2 an die Slave-Komponente S2. Diese antwortet im Datentelegramm AS2 an den Master. Im nächsten Kommunikationsfenster sendet die Master-Komponente M entsprechend an die Slave-Komponente S3 durch Absenden des Datentelegramms M-S3. Diese antwortet wiederum durch das Telegramm AS3. Nach Beendigung des Kommunikationszykluses beginnt die Master-Komponente wiederum damit, an die Slave-Komponente S1 zu senden. Selbstverständlich kann auch eine andere Anzahl von Slave-Komponenten verwendet werden, insbesondere mehr als drei Slave-Komponenten. Die Master-Komponente kann die Salve-Komponenten entweder in einer vorher festgelegten Reihenfolge ansprechen, oder diese Reihenfolge jeweils selbst bestimmen.

Figur 2 zeigt nun die Kommunikation auf dem Daten-Bus, wenn ein sicherheitsrelevantes Ereignis erkannt wird. Im ersten Kommunikationsfenster sendet der Master noch ganz normal im Datentelegramm M-S1 an die Slave-Komponente 1, welche durch AS1 antwortet. Im zweiten Kommunikationsfenster sendet die Master-Komponente im Datentelegramm M-S2 an die Slave-Komponente 2, welche daraufhin durch AS2 antworten will. Im Zeitpunkt T1 erkennt nun jedoch die Sicherheitskomponente S3 ein sicherheitsrelevantes Ereignis. Die Sicherheits-Komponente S3 blockiert als Reaktion darauf den Bus, so dass keine Kommunikation mehr über den Daten-Bus möglich ist. Der blockierte Zeitraum ist dabei schraffiert dargestellt. Zum Zeitpunkt T2 versucht die Master-Komponente M wiederum, ein Datentelegramm zu senden. Die Blockade des Daten-Busses hindert die Master-Komponente jedoch daran, dass Datentelegramm zu senden, so dass die Master-Komponente bereits zum Zeitpunkt T2 die Blockade des Daten-Busses erkennt und dies als Meldung eines sicherheitsrelevanten Ereignisses wertet. Im Zeitpunkt T3 erkennen auch alle Slave-Komponenten die Blockade des Daten-Busses, weil innerhalb des vergangenen Kommunikationsfensters keine Kommunikation stattgefunden hat. Die Slave-Komponenten werten diese Blockade der Kommunikation als Meldung eines sicherheitsrelevanten Ereignisses und reagieren entsprechend. Insbesondere stoppt dabei die Motorsteuerung den Motor des Torantriebs.

In Figur 3 wird nun die Kommunikation über den Datenbus dargestellt, nachdem die Meldung eines sicherheitsrelevanten Ereignisses stattgefunden hat. Zum Zeitpunkt T4 hebt dabei die Sicherheitskomponente die Blockade des Busses wieder auf. Dabei ist der Zeitraum zwischen der Blockade des Datenbusses zum Zeitpunkt T1 und der Freigabe des Datenbusses zum Zeitpunkt T4 so gewählt, dass mindestens ein Kommunikationsfenster lang die Kommunikation auf dem Daten-Bus blockiert ist, so dass alle Slaves die Blockade erkennen können. Z. B. kann dabei die Blockade zwei oder mehr Kommunikationsfenster andauern. Nach Aufhebung der Blockade zum Zeitpunkt T4 beginnt die Master-Komponente M zu Beginn des darauf folgenden Kommunikationsfensters wieder mit der Kommunikation mit den einzelnen Slave-Komponenten. Dabei sendet der Master mit Datentelegramm M-S2 zunächst an den Slave S2, welcher dem Master durch das Datentelegramm AS2 antwortet. Der Master fragt dabei nach, ob der Salve-Komponente S2 ein sicherheitsrelevantes Ereignis vorliegt. Die Slave-Komponente S2 meldet dem Master jedoch, dass bei ihr kein sicherheitsrelevantes Ereignis vorliegt. Im nächsten Kommunikationsfenster sendet die Master-Komponente dann mit dem Datentelegramm M-S3 an die Slave-Komponente S3 und fragt nach, ob ein sicherheitsrelevantes Ereignis vorliegt. Die Slave-Komponente S3, das heißt die Sicherheitskomponente, meldet nun dem Master, dass ein sicherheitsrelevantes Ereignis erkannt wurde und um welches sicherheitsrelevante Ereignis es sich handelt. Die Master-Komponente kann dann in den darauf folgenden Kommunikationsfenstern entsprechende Steuerbefehle an die einzelnen Slave-Komponenten senden.

Erfindungsgemäß können auch mehrere Sicherheitskomponenten vorgesehen sein, welche jeweils die Kommunikation auf dem Daten-Bus für eine bestimmte Zeit blockieren, wenn sie ein sicherheitsrelevantes Ereignis erkennen. Z. B. könnten dabei sowohl die Slave-Komponenten S2 als auch S3 jeweils Sicherheitskomponenten darstellen.

Durch das erfindungsgemäße Verfahren wird dabei sichergestellt, dass alle Slave-Komponenten gleichzeitig die Meldung eines sicherheitsrelevanten Ereignisses erkennen, wenn die Kommunikation auf dem Daten-Bus für ein Kommunikationsfenster blockiert wurde. Die Reaktionszeit beträgt damit unabhängig von der Anzahl der Teilnehmer und der Leistungsfähigkeit des Bus-Systems nur noch zwischen einem und zwei Kommunikationsfenstern. Da es für die Reaktion auf ein sicherheitsrelevantes Ereignis zunächst nicht notwendig ist, nähere Informationen über die Art des sicherheitsrelevanten Ereignisses zu erhalten, reicht es aus, dass die Master-Komponente erst nach Aufhebung der Blockade des Daten-Busses nachfragt, bei welcher Slave-Komponente das sicherheitsrelevante Ereignis vorlag und um was für ein sicherheitsrelevantes Ereignis es sich handelte.

## Patentansprüche

1. Steuerungssystem für einen Torantrieb mit mehreren Komponenten und einem digitalen Datenbus, über welchen die Komponenten kommunizieren, wobei mindestens eine Sicherheits-Komponente wie z. B. eine Schließkantensicherung oder eine Lichtschranke sicherheitsrelevante Ereignisse erkennt und über den Datenbus meldet,
**dadurch gekennzeichnet,**
**dass** die Sicherheits-Komponente, wenn sie ein sicherheitsrelevantes Ereignis erkennt, die Kommunikation auf dem Datenbus für eine bestimmte Zeit blockiert, wobei die übrigen Komponenten die fehlende Kommunikation auf dem Bussystem erkennen und als Meldung eines sicherheitsrelevanten Ereignisses werten.

2. Steuerungssystem nach Anspruch 1, wobei der Motor des Torantriebs bei der Meldung eines sicherheitsrelevanten Ereignisses gestoppt und/oder zurückgefahren wird.

3. Steuerungssystem nach Anspruch 1 oder 2, wobei die Kommunikation über den Datenbus von einer Master-Komponente gesteuert wird, welche die Slave-Komponenten jeweils einzeln anspricht, wobei es sich bei der Sicherheits-Komponente um eine Slave-Komponente handelt.

4. Steuerungssystem nach Anspruch 3, wobei die Master-Komponente, wenn die Kommunikation auf dem Datenbus wieder freigegeben ist, bei den Slave-Komponenten nachfragt, welches sicherheitsrelevante Ereignis erkannt wurde, und gegebenenfalls entsprechende Steuerbefehle absendet.

5. Steuerungssystem nach Anspruch 1 oder 2, wobei die Kommunikation über den Datenbus von einer Master-Komponente gesteuert wird, welche die Slave-Komponenten jeweils einzeln anspricht, wobei es sich bei der Sicherheits-Komponente um die Master-Komponente handelt.

6. Steuerungssystem für einen Torantrieb mit mehreren Komponenten und einem digitalen Datenbus, über welchen die Komponenten kommunizieren, wobei mindestens eine Sicherheits-Komponente wie z. B. eine Schließkantensicherung oder eine Lichtschranke sicherheitsrelevante Ereignisse erkennt und über den Datenbus meldet,
**dadurch gekennzeichnet,**
**dass** die Kommunikation über das Bussystem mittels einer Arbitrierung gesteuert wird und die Sicherheits-Komponente, wenn sie ein sicherheitsrelevantes Ereignis erkennt, die Meldung des Ereignisses unter Verwendung einer systemspezifischen Adresse überträgt.

7. Torantrieb mit einem Steuerungssystem nach einem der vorangegangenen Ansprüche.

8. Verfahren zur Steuerung eines Torantriebs, bei welchem mehrere Komponenten über einen digitalen Datenbus kommunizieren, wobei mindestens eine Sicherheits-Komponente wie z. B. eine Schließkantensicherung oder eine Lichtschranke sicherheitsrelevante Ereignisse erkennt und über den Datenbus meldet,
**dadurch gekennzeichnet,**
**dass** die Sicherheits-Komponente, wenn sie ein sicherheitsrelevantes Ereignis erkennt, die Kommunikation auf dem Datenbus für eine bestimmte Zeit blockiert, wobei die übrigen Komponenten die fehlende Kommunikation auf dem Bussystem erkennen und als Meldung eines sicherheitsrelevanten Ereignisses werten.

9. Verfahren nach Anspruch 8, wobei der Motor des Torantriebs bei der Meldung eines sicherheitsrelevanten Ereignisses gestoppt und/oder zurückgefahren wird.

10. Verfahren nach Anspruch 8 oder 9, wobei die Kommunikation über den Datenbus von einer Master-Komponente gesteuert wird, welche die Slave-Komponenten jeweils einzeln anspricht, wobei es sich bei der Sicherheits-Komponente um eine Slave-Komponente handelt.

11. Verfahren nach Anspruch 10, wobei die Master-Komponente, wenn die Kommunikation auf dem Datenbus wieder freigegeben ist, bei den Slave-Komponenten nachfragt, welches sicherheitsrelevante Ereignis erkannt wurde, und gegebenenfalls entsprechende Steuerbefehle absendet.

12. Verfahren nach Anspruch 8 oder 9, wobei die Kommunikation über den Datenbus von einer Master-Komponente gesteuert wird, welche die Slave-Komponenten jeweils einzeln anspricht, wobei es sich bei der Sicherheits-Komponente um die Master-Komponente handelt.

13. Verfahren zur Steuerung eines Torantriebs, bei welchem mehrere Komponenten über einen digitalen Datenbus kommunizieren, wobei mindestens eine Sicherheits-Komponente wie z. B. eine Schließkantensicherung oder eine Lichtschranke sicherheitsrelevante Ereignisse erkennt und über den Datenbus meldet,
**dadurch gekennzeichnet,**
**dass** die Kommunikation über das Bussystem mittels einer Arbitrierung gesteuert wird und die Sicherheits-Komponente, wenn sie ein sicherheitsrelevantes Ereignis erkennt, die Meldung des Ereignisses unter Verwendung einer systemspezifischen Adresse überträgt.
